(19)

Europäisches
Patentamt
European
Patent Office
Office européen
des brevets

(11) **EP 1 802 952 B1**

(12) **EUROPEAN PATENT SPECIFICATION**

(45) Date of publication and mention
of the grant of the patent:
**03.03.2010 Bulletin 2010/09**

(51) Int Cl.:
**G01L 9/00** *(2006.01)* **G01L 7/08** *(2006.01)*
**F15C 3/04** *(2006.01)* **B60C 23/04** *(2006.01)*

(21) Application number: **04789585.9**

(22) Date of filing: **18.10.2004**

(86) International application number:
**PCT/AU2004/001419**

(87) International publication number:
**WO 2006/042357 (27.04.2006 Gazette 2006/17)**

(54) **MICRO-ELECTROMECHANICAL PRESSURE SENSOR**

MIKRO-ELEKTROMECHANISCHER DRUCKSENSOR

CAPTEUR DE PRESSION MICRO ÉLECTROMÉCANIQUE

(84) Designated Contracting States:
**AT BE BG CH CY CZ DE DK EE ES FI FR GB GR HU IE IT LI LU MC NL PL PT RO SE SI SK TR**

(43) Date of publication of application:
**04.07.2007 Bulletin 2007/27**

(73) Proprietor: **Silverbrook Research Pty. Ltd**
**Balmain, New South Wales 2041 (AU)**

(72) Inventors:
• **SILVERBROOK, Kia**
**Balmain, New South Wales 2041 (AU)**

• **MALLISON, Samuel George**
**Balmain, New South Wales 2041 (AU)**

(74) Representative: **Moore, Barry et al**
**Hanna Moore & Curley**
**13 Lower Lad Lane**
**Dublin 2 (IE)**

(56) References cited:
**EP-A2- 0 261 972      EP-A2- 0 756 164**
**WO-A2-03/106952      US-A- 6 051 853**

Printed by Jouve, 75001 PARIS (FR)

## Description

### Technical Field

The present invention generally relates to a pressure sensor and in particular, a micro-electro mechanical (MEMS) pressure sensor.

### Cross References to Related Applications

The following patents or patent applications filed by the applicant or assignee of the present invention

| | | | | |
|---|---|---|---|---|
| 09/113,078 | 10/868,866 | 10/043,300 | 10/043,299 | 10/129,502 |
| 10/043,350 | 10/129,501 | 10/043,295 | 10/129,500 | 10/043,351 |
| 10/129,499 | 10/129,504 | 10/466,072 | 10/129,505 | 10/040,455 |
| 10/250,967 | 10/040,456 | 10/853,270 | 10/040,473 | 10/466,059 |
| 10/040,405 | 10/466,060 | 10/893,376 | 10/898,214 | |

Australian Provisional Patent Applications No_(MEMS26 Prov)

Some applications have been listed by docket numbers. These will be replaced when application numbers are known.

### Background Art

The invention has wide-ranging application across many fields of industry. It is particularly suited to pressure measurement in harsh or dynamic environments that would preclude many other pressure sensors. These applications include, but are not limited to:

monitoring engine pressure (cars, aircraft, ships, fuel cells)
sensors for high speed wind tunnels
sensors to monitor explosions
sensors for boilers
sensors for dish-washing machines
sensors for irons (both domestic and industrial)
sensors for other steam based machines where overpressure can lead to destruction and loss of life

However, in the interests of brevity, the invention will be described with particular reference to a tire pressure monitor and an associated method of production. It will be appreciated that the Tire Pressure Monitoring System (TPMS) described herein is purely illustrative and the invention has much broader application.

Transportation Recall Enhancement, Accountability and Documentation (TREAD) legislation in the United States seeks to require all U.S. motor vehicles to be fitted with a tire pressure monitoring system (TPMS). This is outlined in U.S. Dept. of Transportation, "Federal Motor Vehicle Safety Standards: Tire Pressure Monitoring Systems; Controls and Displays", US Federal Register, Vol. 66, No. 144,2001, pp. 38982-39004. The impetus for this development comes from recent Firestone/Ford Explorer incidents which led to a number of fatal accidents. A careful assessment of tire inflation data found that approximately 35% of in-use tires are under inflated, whilst an assessment of the effect of a TPMS found that between 50 to 80 fatalities, and 6000 to 10,000 non-fatal injuries, per annum could possibly be prevented. This is discussed in U.S. Dept. of Transportation, "Tire Pressure Monitoring System," FMVSS No. 138,2001. European legislation also appears likely to require the fitting of a TPMS to increase tire life, in an effort to reduce the number of tires in use by 60% in the next 20 years, so as to minimise the environmental impacts.

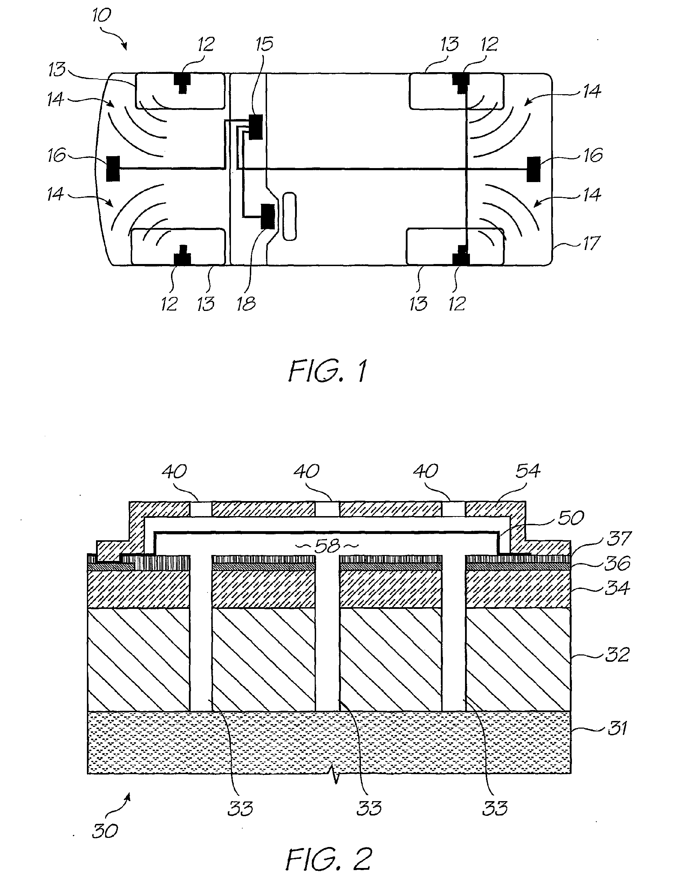

Two different kinds of TPMS are currently known to be available in the marketplace. One kind of TPMS is based on differences in rotational speed of wheels when a tire is low in pressure. The asynchronicity in rotational speed can be detected using a vehicle's anti-braking system (ABS), if present. The second kind of TPMS measures tire pressure directly and transmits a signal to a central processor. Fig. 1 (prior art) illustrates a schematic of a typical pressure measurement based TPMS 10. Sensors 12, provided with a transmitter, measure pressure in tires 13 and transmit a signal 14 to antenna 16. The data can then be relayed to a receiver 15 and processed and displayed to a driver of the vehicle 17 on display 18.

Table 1 lists some presently known TPMS manufacturers/providers. Motorola and Pacific Industries have each developed a TPMS, whilst other companies listed in Table 1 act as suppliers for TPMS manufacturers, including some automobile producers that install their own TPMS.

Table 1. Pressure sensor manufacturers involved in TPMS.

| Company | Supplier to | Type of Sensor |
|---|---|---|
| Motorola | Motorola | Capacitance |
| Pacific Industries | Pacific Industries | Piezoresistive |
| SensoNor | Siemens, TRW, Beru, Porsche, BMW, Ferrari, Mercedes, Toyota | Piezoresistive |
| Siemens | Goodyear | Piezoresistive |
| Transense Technologies | Under development | Surface Acoustic Wave |
| TRW/Novasensor | Smartire, Michelin, Schrader, Cycloid | Piezoresistive |

There are two main types of pressure sensor; resistive or capacitive. Both types of these sensors rely on deflection of a membrane under an applied pressure difference. One side of the membrane is exposed to internal pressure of a tire while the other side of the membrane forms one wall of a sealed cavity filled with gas at a reference pressure.

The resistive-type sensors typically employ silicon-based micro-machining to form a Wheatstone bridge with four piezoresistors on one face of the membrane. The sensor responds to stress induced in the membrane. For capacitive-type sensors, the membrane forms one plate of a capacitor. In this case, the sensor responds to deflection induced in the membrane. Preferably, the responses should be linear with pressure, for predicability, up to at least a critical point.

Transense Technologies, listed in Table 1, have developed a different type of sensor, based on surface acoustic wave detection. This sensor relies on interferometric measurement of the stress-induced deflection of a reflective membrane. A fibre-optic cable both transmits and receives laser light, with one end of the fibre-optic cable being inserted into the interferometer. This system is discussed in Tran, T.A.. Miller III, W.V., Murphy, K.A., Vengsarkar, A.M. and Claus, R.O., "Stablized Extrinsic Fiber Optic Fabry-Perot Sensor for Surface Acoustic Wave Detection", Proc. Fiber Optic and Laser Sensors IX, SPIE vol. 1584, pp 178-186, 1991.

Presently, there are also a variety of different kinds of deployment means for sensors in a TPMS, including valve cap and valve stem based systems, systems with the sensor mounted on the wheel rim or wheel hub, and also a tire-wheel system developed by an alliance of several tire manufacturers which has a sensor embedded in the wheel frame itself. These different kinds of deployment in TPMS are listed in Table 2.

Table 2. Specifications of TPMS in production. AM = products fitted to a vehicle after vehicle purchase (After Market).

| Company/ Group | Type of System | Fitted to | Warning Level (psi) | Accuracy (psi) | Sampling |
|---|---|---|---|---|---|
| Beru | Wheel Rim | Audi, BMW, Mercedes | user set | 1 | every 3 sec, transmitted every 54 sec |
| Cycloid | Wheel Cap (pump) | Ford, Goodyear | 18 | 1 | 30 sec / 10 min |
| Fleet | Valve Cap | heavy vehicles | 20 | 1 | 3.5 sec |
| Johnson | Valve Stem | AM | 19.9 | 1 | 15 min |
| Michelin/ Goodyear/ Pirelli/ Dunlop | PAX System | Renault, Caddillac | ? | ? | ? |
| Motorola | Wheel Rim | AM | ? | ? | 6 sec |
| Omron | Valve Stem | AM | ? | ? | ? |
| Pacific Industries | Valve Stem | AM | 20.3 / user set | 1.8 | 15 sec / 10 min |

(continued)

| Company/ Group | Type of System | Fitted to | Warning Level (psi) | Accuracy (psi) | Sampling |
|---|---|---|---|---|---|
| Schrader | Valve Stem | Corvette, Peugeot, Cadillac | 22 | 2% | ? |
| Smartire | Wheel Rim | Aston Martin, Lincoln, AM | ? | 1.5 | 6 sec |

To increase battery life, most TPMS are in stand-by mode for the majority of time, only operating at set intervals. The U.S. legislation requires the system to alert the driver within a set time of detecting significant tire under inflation conditions. It also requires a warning light to signal when the tire is either 20% or 25% under-inflated. Most of the devices presently available in the market are accurate to within $\pm$ 1 psi, which represents $\pm$ 3 % for a tire pressure of 30 psi. More generally, the sensor should perform in a harsh environment, with temperatures up to 130 °C and accelerations of 1000g or more. Tire pressure increases and decreases in response to corresponding changes in temperature. Most systems presently available include a sensor to account for thermally induced changes in tire pressure sensor sensitivity (Menini, Ph., Blasquez, G., Pons, P., Douziech, C. Favaro, P. and Dondon, Ph., "Optimization of a BiCMOS Integratetd Transducer for Self-Compensated Capacitive Pressure Sensor," Proc. 6th IEEE Int. Conf. Electronics, Circuits and Systems, Vol 2, pp.1059-1063, 1999).

As TPMS's become standard on all motor vehicles, there is a clear imperative to produce low cost, reliable, robust sensors that meet or exceed the statutory requirements.

The reference to any prior art in this specification is not, and should not be taken as, an acknowledgment or any form of suggestion that such prior art forms part of the common general knowledge.

Published PCT Patent Application No. WO03106952 discloses a micro-mechanical pressure transducer in which a capacitive transducer structure is integrated with an inductor coil to form a LC tank circuit, resonance frequency of which may be detected remotely by imposing an electromagnetic field in the transducer. The capacitive transducer structure comprises a conductive movable diaphragm, a fixed counter electrode, and a predetermined air gap between said diaphragm and electrode. The diaphragm deflects in response to an applied pressure differential, leading to a change of capacitance in the structure and hence a shift of resonance frequency of the LC tank circuit. The resonance frequency of the LC circuit can be remotely detected by measuring and determining the corresponding peak in electromagnetic impedance of the transducer.

US Patent No. 6,051,853 discloses a semiconductor pressure sensor that utilises electrostatic capacitance. The sensor has a plurality of pressure sensing electrostatic capacitances and a reference electrostatic capacitance formed on one side of a silicon chip. As a movable electrode, the pressure sensing electrostatic capacitances each have a diaphragm, which may have a displacement portion composed of a central area thereof, and a peripheral portion which is more deformable than the central portion.

SUMMARY OF THE INVENTION

Accordingly, a first embodiment of the invention provides a capacitive pressure sensor as detailed in claim 1. Advantageous embodiments are provided in the dependent claims.

**Brief Description of the Figures**

Embodiments of the present invention is now described by way of example only, with reference to the accompanying drawings in which:

Fig. 1 (Prior art - http://www.pacific-ind.com/eng/products2/carsystem.html) illustrates a typical TPMS used in a four wheel vehicle;

Fig. 2 is a schematic partial section of a sensor according to one embodiment of the present invention;

Fig.s 3, 5, 8, 10, 13, 15, 18 and 20 are schematic plan views of masks suitable for use in particular stages of the fabrication process;

Figs. 4, 6, 7, 9, 11, 12, 14, 16, 17, 19, 21, 22 and 23 illustrate sections of an embodiment at successive stages of fabrication;

Fig. 24 is a schematic partial section of a reference sensor for providing temperature compensation for a sensor according to present invention;

Figs. 25a to 25d are a schematic representation of the installation of the sensor in the valve stem of a vehicle tire;

Fig. 26 is a diagrammatic representation of the sensor circuit;

Figs. 27a to 27h are partial perspectives (some partially sectioned) of a sensor according to an embodiment of the present invention;

Figs. 28a (perspective view) and 28b (side view) illustrate a schematic of a membrane with corrugations according to a possible embodiment of the present invention;

Fig. 29 illustrates a comparison of linear and non-linear theory with linear and non-linear finite element modelling for a flat circular titanium nitride (TiN) membrane, with $R = 50$ μm and $t = 0.5$ μm;

Fig. 30 illustrates the effect of membrane corrugations on pressure-deflection sensitivity;

Fig. 31 illustrates an expanded view of Von Mises Stress distribution near an edge of a membrane, with $p = 1$ MPa, $q = 4$ and $l = 10$ μm; and

Fig. 32 illustrates the effect of temperature on the pressure-deflection response of a membrane with $q = 8$ and $l = 10$ μm.

## Detailed Description of the Preferred Embodiments

The following embodiments are described in order to provide a more precise understanding of the subject matter of the present invention. The embodiments focus on a capacitive type sensor. Other known forms of pressure sensor are:

(i) Piezo-resistive, where the membrane is formed from a non-conductive material and the piezo material is in contact with the membrane. Deflections of the membrane give rise to piezo-induced changes in resistivity (and hence current, if a voltage is applied) that can be monitored electronically.

(ii) Resonant pressure sensors, where the frequency of oscillation of the membrane depends on the pressure difference. The initial resonance could be activated by using a time-varying electrostatic force between the two electrodes.

(iii) Force compensation pressure sensors, where an electrostatic force is applied to maintain the membrane at the initial position. Once again the electrostatic force between the two electrodes can be used to position the membrane.

Each of these sensor types has particular advantages and limitations. Piezo-resistive sensors are reasonably well known and understood but require the use of exotic materials. The sensors of (ii) and (iii) are less popular but do not require exotic materials. Capacitive sensors are typically robust and highly versatile and therefore the preferred embodiments will be based on this type of sensor.

### Functional Overview

A brief overview of the basic operation of the sensor will be described with reference to Figure 2. Figure 2 shows a schematic partial section of a capacitive sensor fabricated using the masked lithographic etching and deposition techniques typically used in the production of semiconductor chips. The fabrication steps are described in detail below.

The sensor 30 is formed on a silicon substrate 32, provided with sealed channels or holes 33, on which is deposited a CMOS layer 34. A conductive layer 36 is deposited on the CMOS layer 34 followed by a passivation layer 37 as illustrated. The passivation layer 37 may be an insulating or semi-conducting material. A conductive membrane 50 is spaced from conductive layer 36 to form a reference chamber 58. Roof or cap 54 covers the membrane 54. The roof or cap 54 is provided with holes 40, or channels or the like, so that the membrane 50 is exposed to tire pressure.

The membrane 50 deflects due to differential stresses. The amount of deflection for a given pressure difference, depends on the membrane diameter and thickness, the nature of the support (for example, strongly fixed, weakly pinned), and the membrane material properties (for example elastic modulus, Poisson ratio, density).

Both the membrane 50 and conductive layer 36 are electrodes, which develop a capacitance, $C$, between them which depends upon the electrical permittivity of the ambient material, $e$, the electrode spacing, $d$, and the electrode area, $A$. For the case where both electrodes are circular disks, $C = e\ A/d$. The sensor is then calibrated for measured capacitance versus applied pressure.

### Fabrication Overview

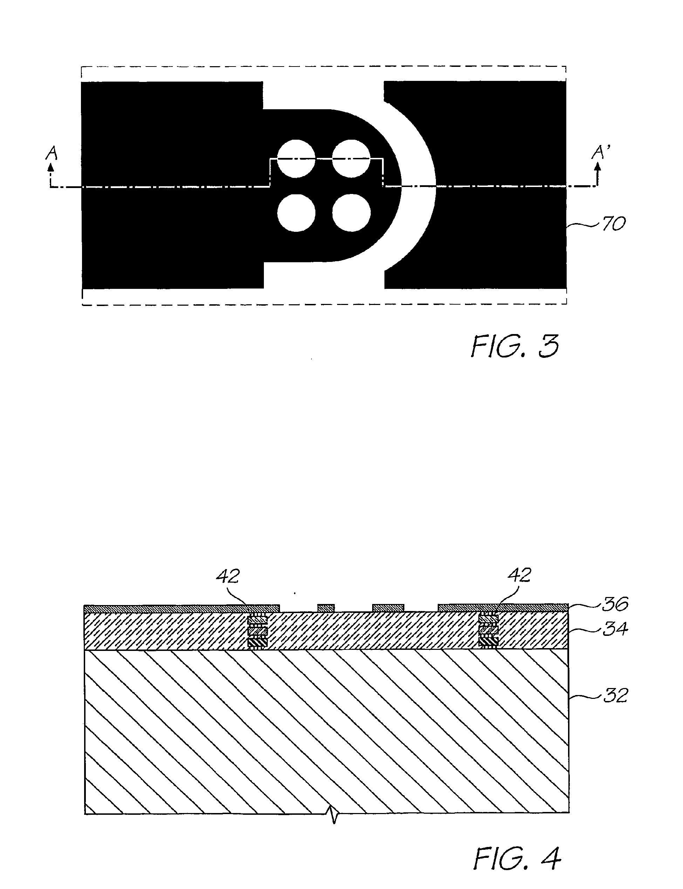

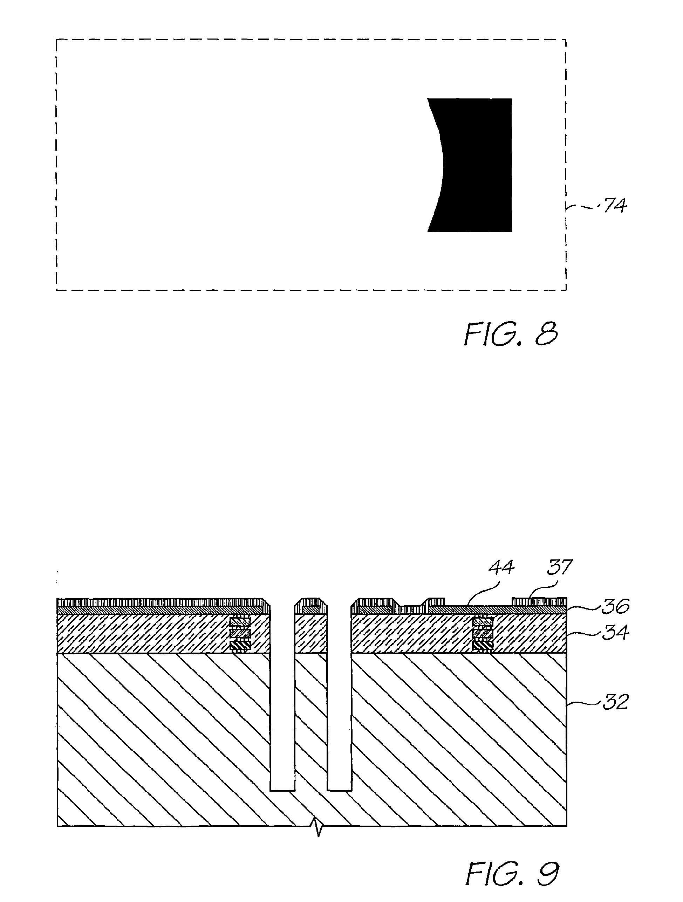

Figures 4, 6, 7, 9, 11, 12, 14, 16, 17, 19, 21, 22 and 23 show the main lithographic etching and deposition steps involved in the fabrication of a pressure sensor according to the invention. The masks associated with the successive steps are shown in Figures 3, 5, 8, 10, 13, 15, 18 and 20. When etching photoresistive material the solid black areas of the masks are the regions that are removed by the subsequent etch. However, when etching metal and other non-photoresistive layers, the blank or unmasked areas of the mask denote the regions that are removed. Skilled workers in this field will understand which masks are applied to photoresist and which are applied to non-photoresist.

Figure 4 is section A-A' through the wafer 32 of a partially fabricated sensor. The silicon wafer 32 has previously been ground to the required thickness and CMOS circuitry 34 is deposited on its top surface. The final CMOS layer provides the bottom electrode 36 for the sensor. Guard rings 42 are formed in the metallization layers of the CMOS circuitry 34. The guard rings 42 prevent air or other fluid from diffusing from the subsequently etched sealed passages 33 (see Fig. 2) through the wafer 32 to the circuitry where it can cause corrosion. The mask 70 for this first metal layer 36 is shown in Fig. 3, with the blank regions being etched away.

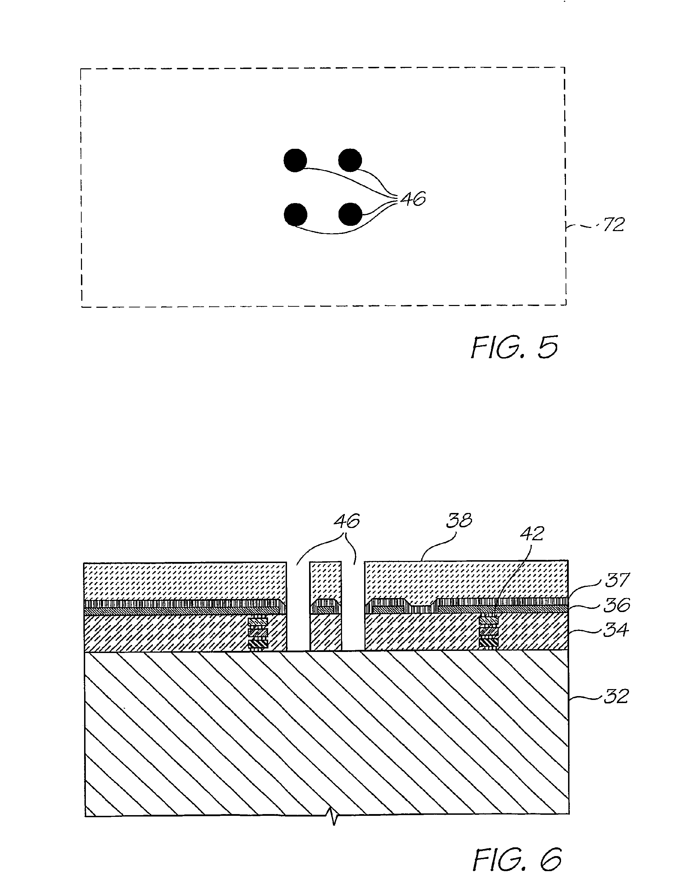

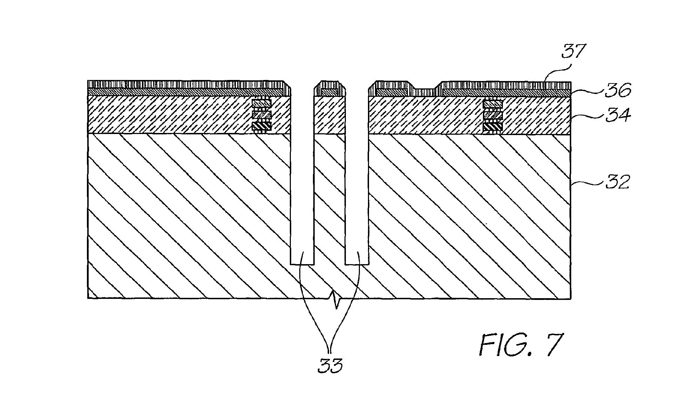

As shown in Fig. 6, a passivation layer 37 and sacrificial layer 38 are deposited next. This is followed by masking and etching through to the silicon substrate 32. This etch is known as the dielectric etch and the associated mask 72 is shown in Fig. 5. The mask represents the regions 46 that are etched. Following the dielectric etch, the sacrificial layer 38 is etched away with a different etchant which also etches the holes 33 deeper into the wafer substrate 32 (see Fig.7).

Referring to Fig.s 8 and 9, the passivation layer 37 is then etched in a region 44 above the upper contact to provide an electrical pathway for the second electrode (subsequently deposited).

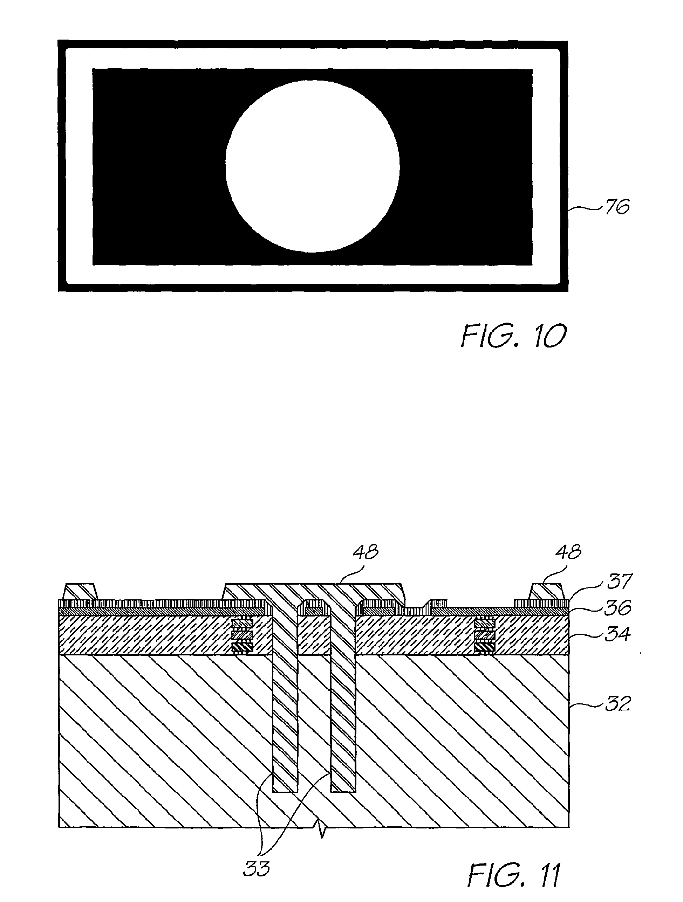

As shown in Fig. 11, sacrificial material 48 is then deposited to fill the openings 33 into the silicon 32 made by the dielectric etch. This deposition continues until the top of the sacrificial layer 48 is level and at a height which provides the requisite gap height between the top and bottom electrodes. The first sacrificial layer 48 is then patterned and etched. The associated mask 76 is shown in Fig. 10.

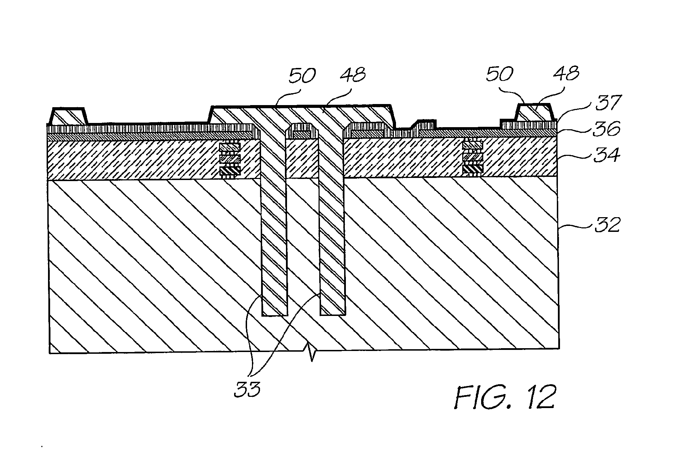

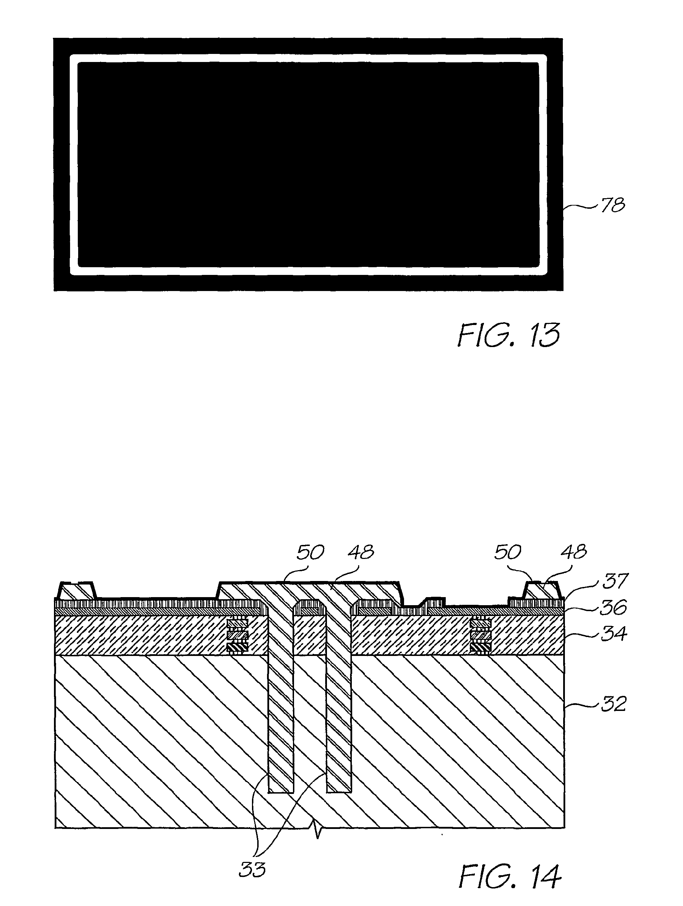

Fig. 12 shows the deposition of the upper electrode layer 50, also called the second metal layer. This layer is etched with the mask 78 shown in Fig. 13, with the blank regions being removed by the etch (see Fig. 14). The upper electrode layer 50 becomes the flexible membrane in the finished sensor.

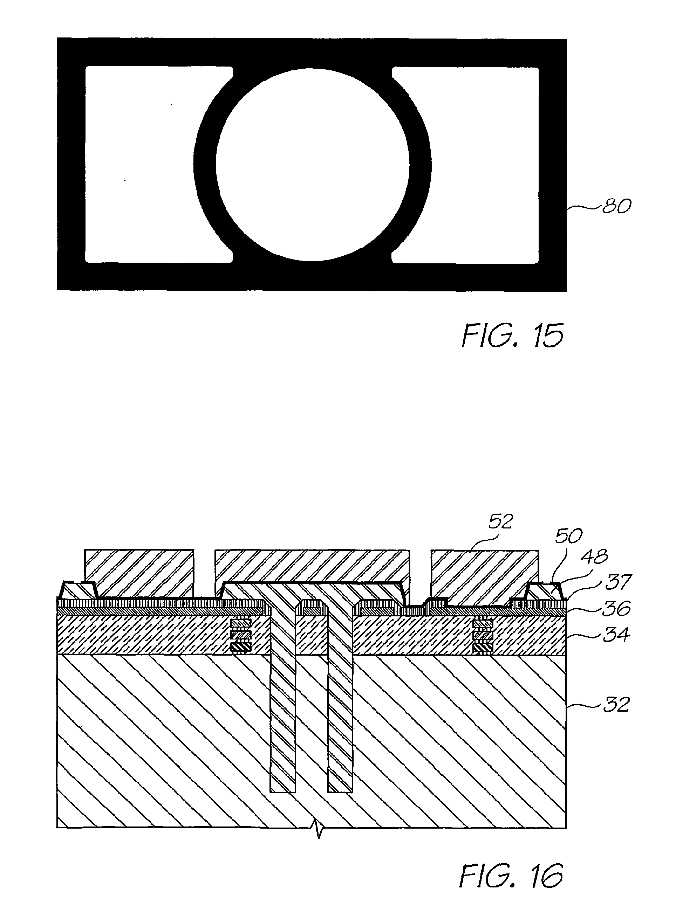

A second sacrificial layer 52 is then deposited (see Fig. 16), and subsequently etched. The relevant mask 80 is shown in Fig. 15.

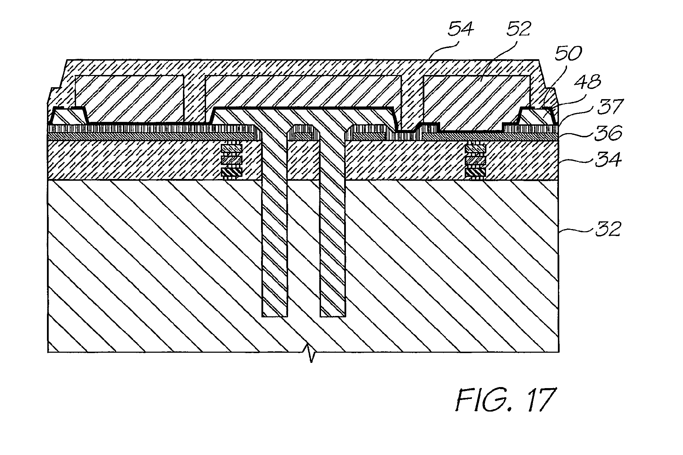

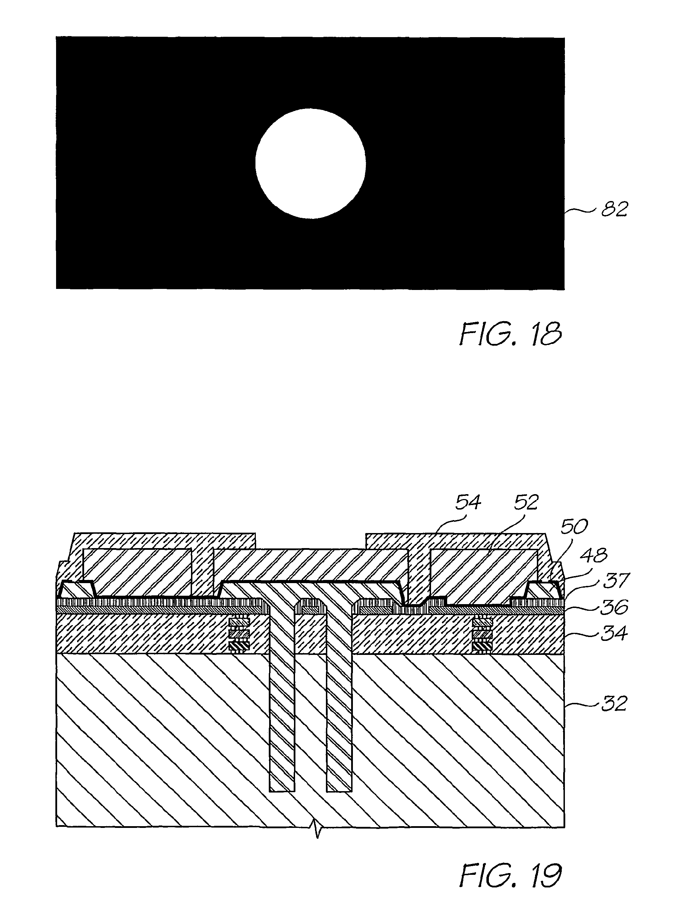

Fig. 17 shows the deposition of the roof layer 54. It is then etched using mask 82 shown in Fig. 18, with blank areas removed (see Fig. 19).

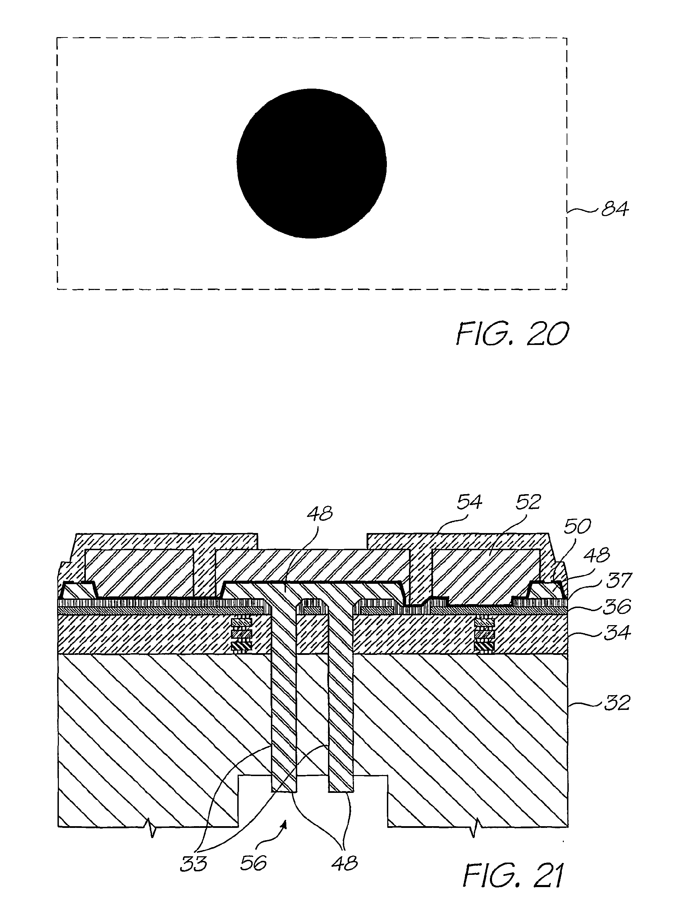

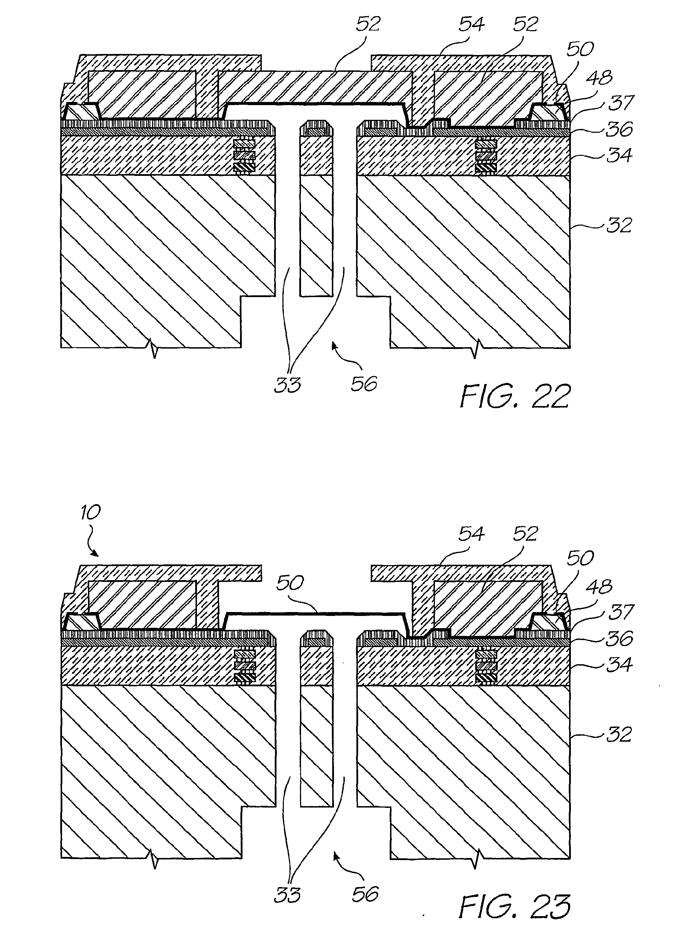

The wafer is subsequently turned over for 'back etching' from the reverse side of the wafer 32. Fig. 21 shows a deep back etch 56 extending through to meet the openings 33 in accordance with the mask 84 shown in Fig. 20. The openings 33 are filled with sacrificial material 48 which is exposed by the deep back etch 56. The sacrificial material is removed by plasma cleaning (see Fig. 22) through the deep etch 56.

As shown in Fig. 23, the wafer is again turned over and the sacrificial material 52 is removed through the hole in the roof layer 54. To complete the device, it needs to be packaged, with the bottom face of the wafer being sealed. Skilled workers will appreciate that there are various methods of achieving this. However, in the preferred embodiment, the bottom face of the wafer is sealed using wafer bonding, which is discussed in detail below.

## Temperature Compensation

Differential thermal expansion of the components within the pressure sensor will affect the membrane deflection and therefore the sensor output. If the sensor is used in an environment with a large temperature variation, the sensor accuracy can become unacceptable. To address this, the pressure sensor can be coupled with a temperature sensor, with the pressure sensor then calibrated as a function of temperature.

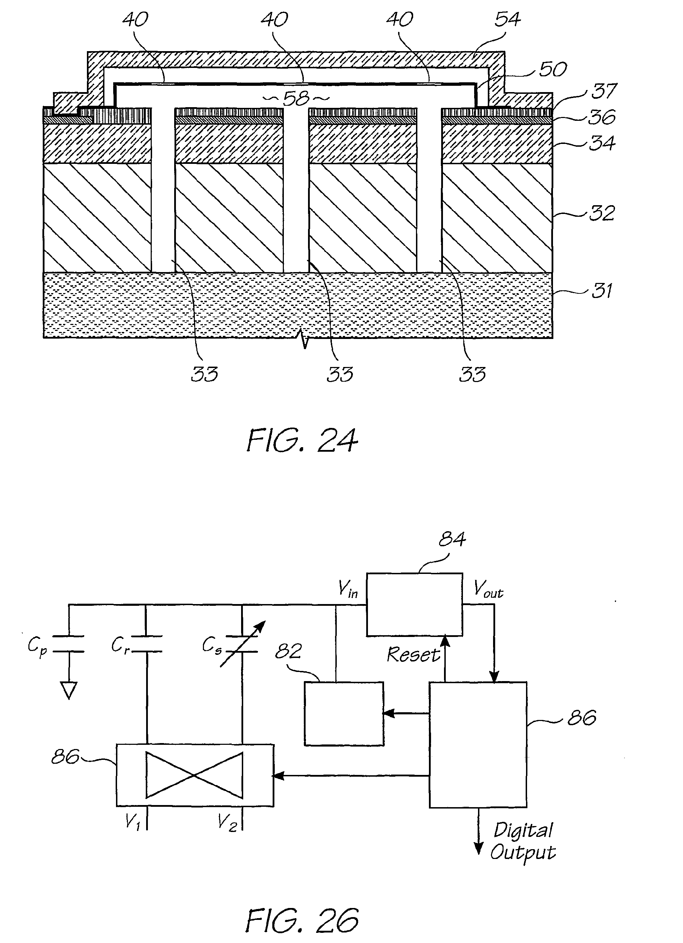

To accommodate this, an embodiment of the present invention can conveniently incorporate a temperature sensor to account for temperature effects on the pressure sensor. A schematic section of the temperature is shown in Fig. 24. Reference chamber 58, can be etched into the same wafer substrate, but is not exposed to tire pressure like the adjacent pressure sensor (not shown). In these embodiments, the coupled sensors form an active and a reference sensor, the latter responding only to thermal changes. Skilled workers in this field will appreciate that the reference sensor can also serve as a temperature sensor with the addition of circuitry calibrating the capacitance to the temperature.

Referring to Fig. 24, the reference sensor is made in the same way as the active sensor, except that the holes 40 are made in the membrane 50 instead of the roof layer 54. The sacrificial material 52 between the membrane 50 and the roof layer 54 is removed with a back etch through the holes 40 in the membrane 50.

An alternative to this is to keep the membrane 50 intact and etch away the second sacrificial layer material 52 from above the active part of this layer, before deposition of the roof layer 54. This causes the membrane 50 to be bonded to the roof 54, and this configuration is much stiffer. Therefore, the exact dimensions of the reference sensor would need to be adjusted to provide a similar capacitance change in active and reference sensors due to thermally induced stress changes in the membrane 50.

## Temperature Compensating Sensor Design

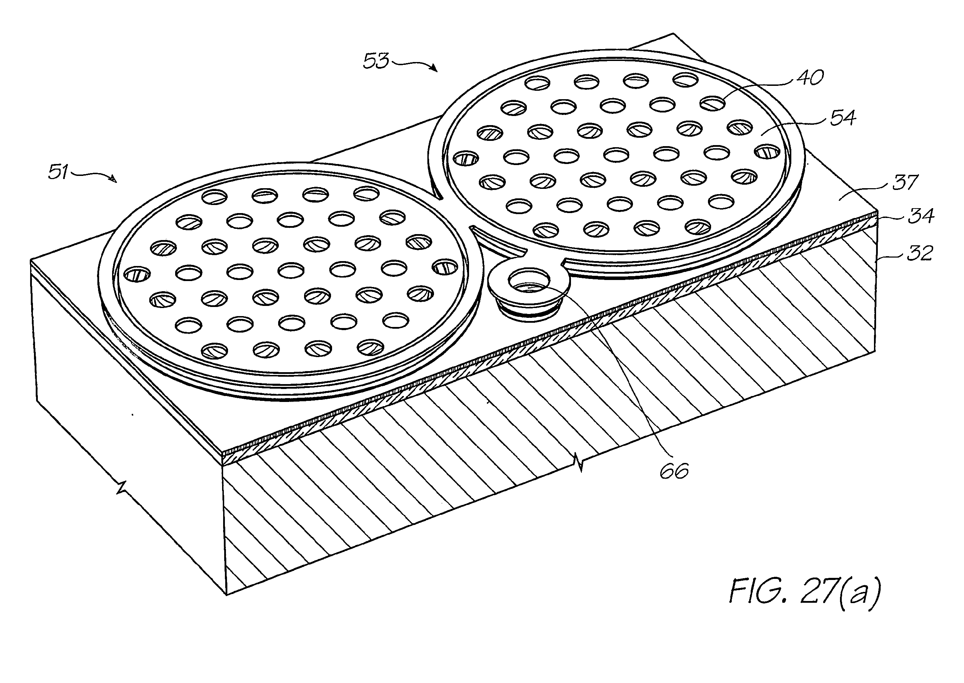

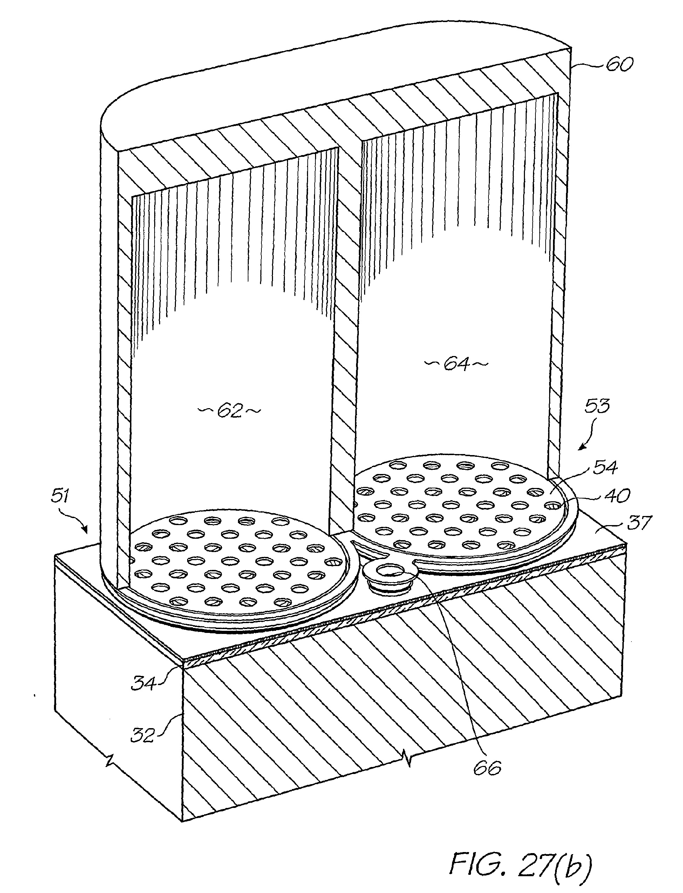

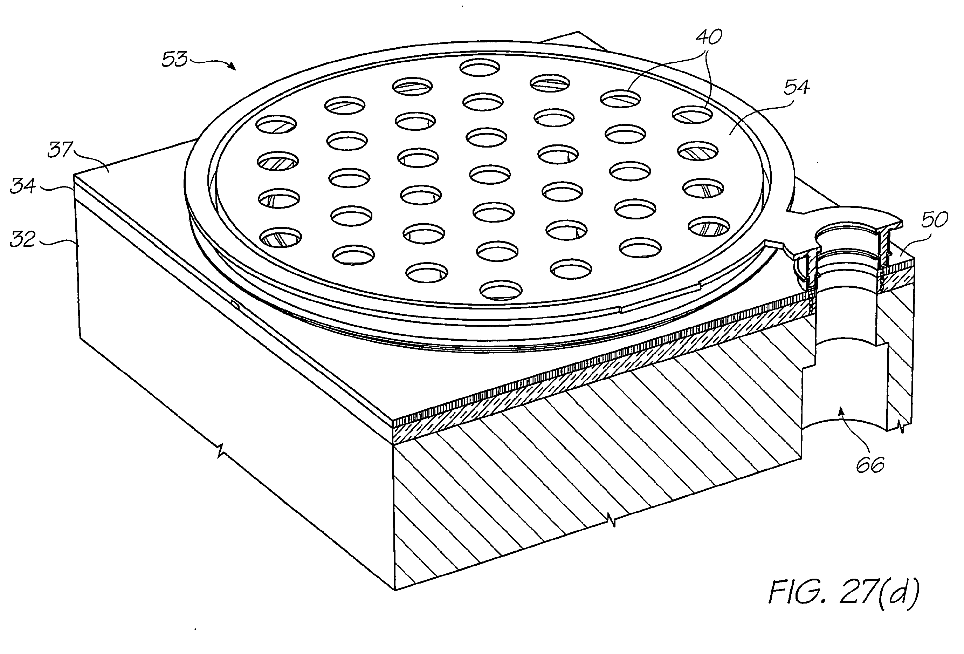

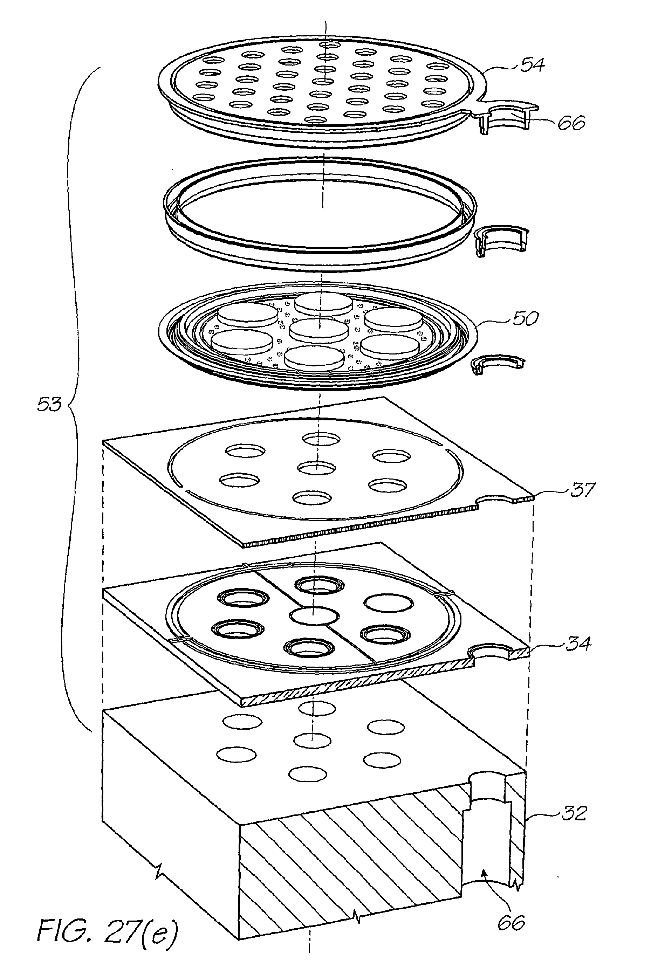

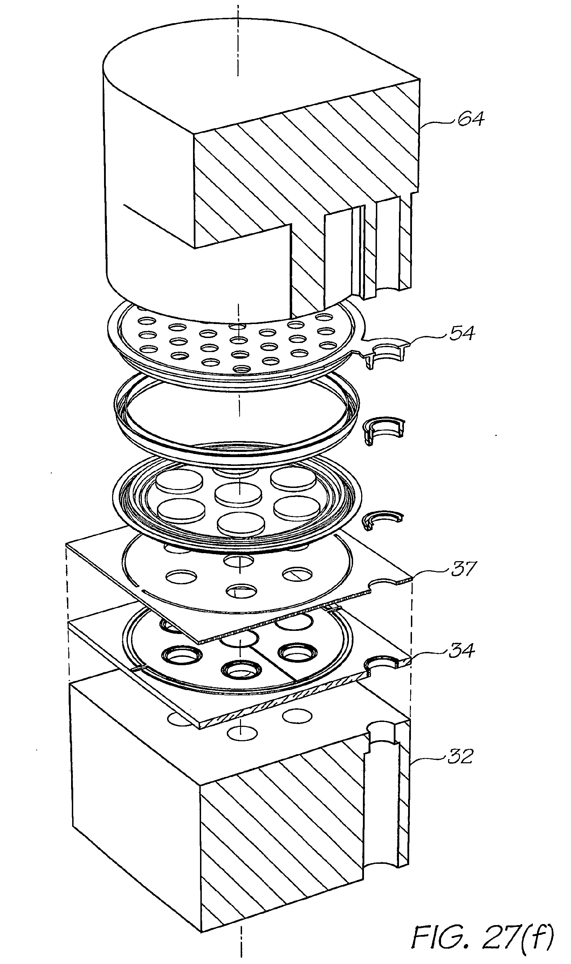

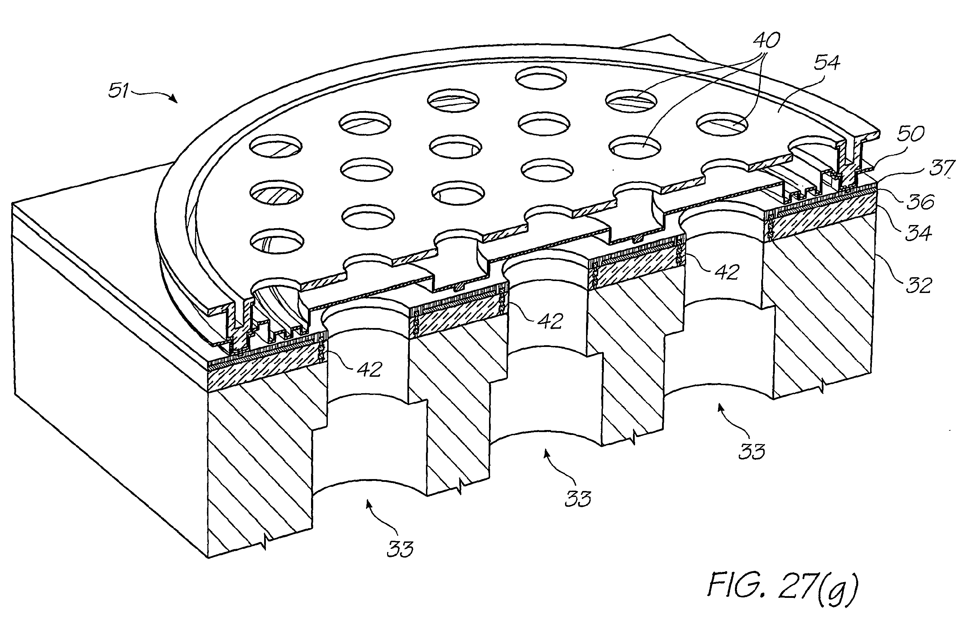

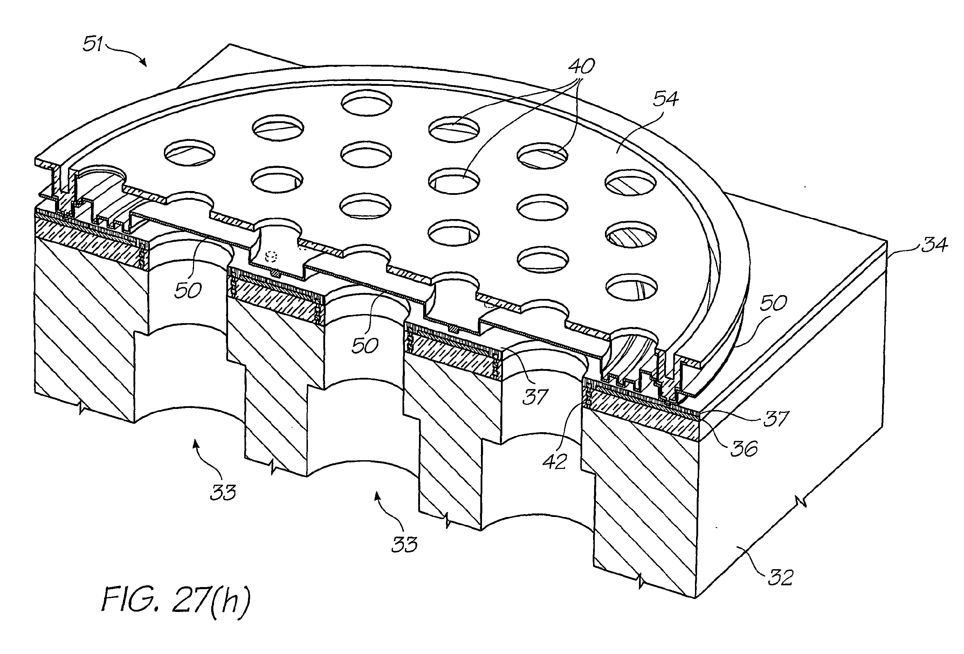

Figs. 27a to 27h show perspectives of temperature compensating sensor at various stages of fabrication. As best shown in Fig.s 27(a) to 27(d), the reference sensor 51 is etched into the same wafer substrate 32 as the active sensor 53. This embodiment has further increased the structural strength by adding the top cover 60 over the roof layers 54 of the active and reference membranes. The cover 60 defines separate chambers 62 and 64 over the reference and active roofs 54 respectively. In this embodiment, the roof layers 54 of each sensor stop smaller particles from contacting the membranes 50. The top cover 60 provides much greater structural rigidity while protecting the membrane and roof guard layers 54 from damaging contact during installation. However, even with the top cover 60, the sensor has overall dimensions that are small enough for installation in the tire valve or valve stem.

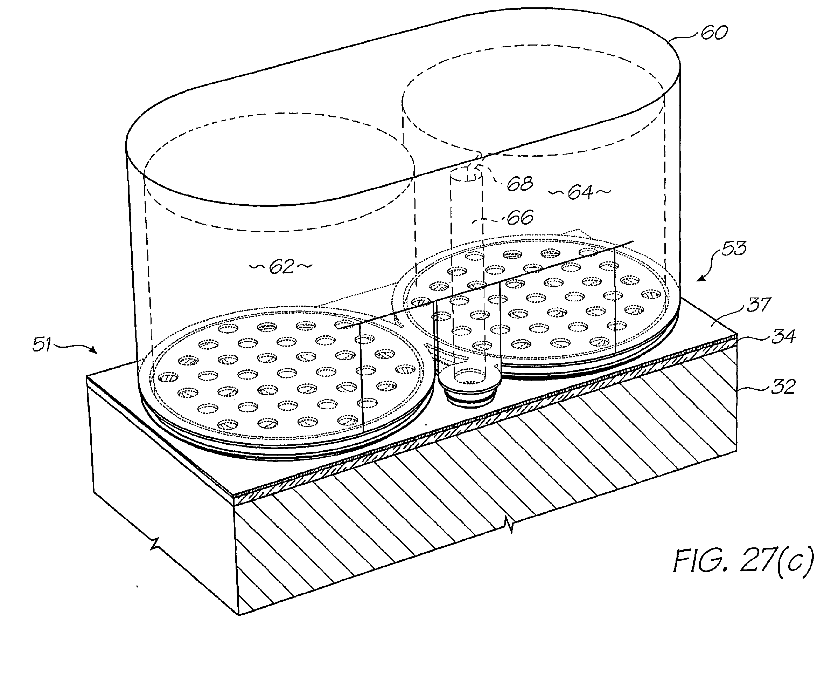

As best shown in Fig. 27c, chamber 62 is sealed from the tire pressure, whereas chamber 64 is exposed to the tire pressure via vent 66 and channel 68. While it has not been shown in the figures, it will be appreciated that the vent 66 extends through to the back surface of the wafer substrate 32, where it is not sealed, but open to the tire pressure. If the sensor is wafer bonded to a sealing wafer (as discussed below), the sealing wafer has corresponding holes for establishing a fluid connection with the tire pressure.

### *Semiconductor Fabrication Techniques*

Using the lithographically masked etching and deposition procedures of semiconductor fabrication, it is possible to manufacture a robust, low cost tire pressure sensor from Micro-Electro-Mechanical (MEM) based devices for use in a TPMS. The membrane can be formed from a material that is capable of withstanding a wide range of environmental conditions. An advantage of such a tire pressure sensor is the relatively low cost of manufacture. The membrane can be formed in many possible geometries, for example, as a generally flat or planar shape such as a disc, or having a featured surface.

### *Sensor Circuitry*

Figure 26 is a diagrammatic representation of a capacitance sensing circuit where:

$C_s$ is the capacitance of the sensor capacitor;
$C_r$ is the capacitance of the reference capacitor (preferably made in the same way as sensor capacitor but non-sensing); and
$C_p$ is a parasitic capacitance to ground.

V1 and V2 are constant voltages reference voltages provided to switches 80. These may be chosen to be two of the circuit power supplies or internal regulated supplies. These voltages are then switched onto one of each of the capacitor plates charging or discharging them. The voltage $V_{in}$ is fed to charge amplifier 84, a high gain device, which amplifies the voltage to $V_{out}$. $V_{in}$ provides a measure of charge imbalance in the circuit when it is operated as follows:

Step 1.
Connect $C_r$ to V2, $C_s$ to V1; reset the charge amplifier 84 which forces $V_{in}$ to a fixed voltage $V_r$ and set the charge injector to a know state with charge $Q_{I1}$.
The total stored charge, $Q_1$, is:

$$Q_1 = C_r(V2\text{-}V_r) + C_s(V1\text{-}V_r) + Q_{I1}$$

Step 2.
Connect $C_r$ to V1, $C_s$ to V2, and remove the reset from the charge amplifier 84. The output from the charge amplifier 84 is monitored by the control 86 and feedback applied to the charge injector such that the total charge is balanced forcing $V_{in} = V_r$ by injecting a charge of $Q_{I1}\text{-}Q_{I2}$.
The total stored charge, $Q_2$, is given by:

$$Q_2 = C_r(V1\text{-}V_r) + C_s(V2\text{-}V_r) + Q_{I2}$$

Feedback forces $Q_1 = Q_2$, so that the digital output from the control 86 is:

$$Q_{I1} - Q_{I2} = (V1-V2).(C_T-C_s)$$

The control logic 86 may operate an iterative procedure to determine the required output to obtain this charge difference, at the end of which it will produce the required digital output.

The voltage on $C_p$ is the same at the end of Step 1 and Step 2, and so ideally, does not contribute to the digital output.

Optionally, these steps can be repeated and an averaging applied to the digital output to reduce random noise. Furthermore, additional steps may be added to the above idealized case, in order to improve accuracy of the circuit.

*Sensor Installation and Power Supply*

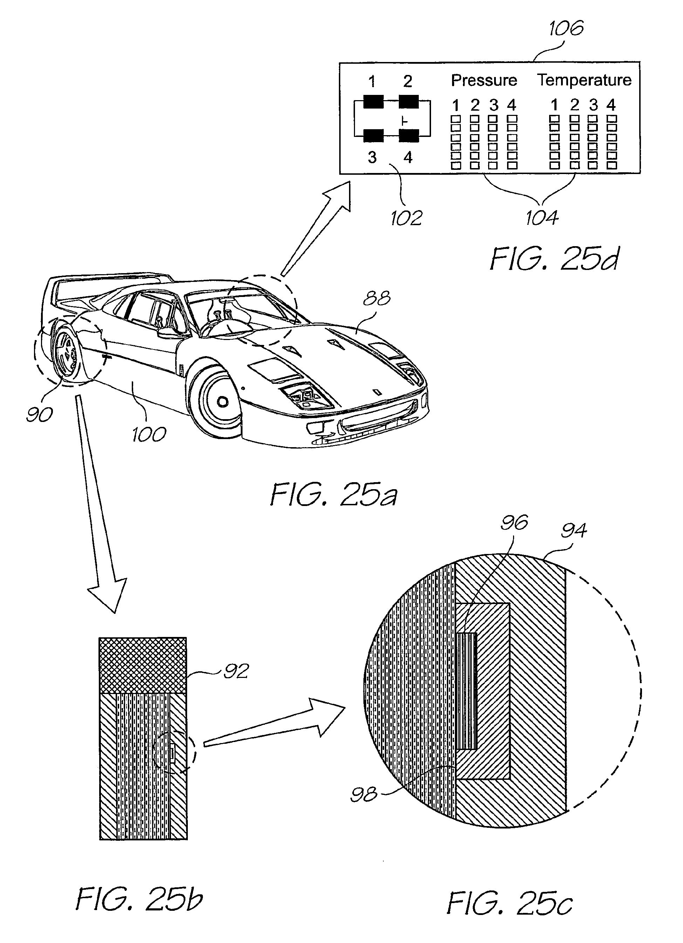

Figures 25a to 25d schematically show the installation of the sensor within the valve stem of a car tire. The pressure sensor can be mounted in other locations including the valve head, the tire wall, the wheel hub and so on. However, the relatively solid structure of the valve stem makes it the most convenient component for automated installation of the sensor. Furthermore as the stem closer to the centre of the wheel than the rest of the tire, the acceleration forces on the sensor generated by wheel rotation are less.

As best shown in Figures 25b and 25c, the sensor 96 is mounted in the valve stem 92. A small recess is created in the valve stem wall 94. A thin layer of hard-setting adhesive 98 is applied as a coating on the recess walls. The sensor chip 96 is then adhered into the recess with any excess adhesive removed before the adhesive 98 is cured.

Power can be supplied to the sensor chip 96 in a number of fashions, including, but not limited to, a long-life battery (not shown) located in the valve stem wall 94, a long-life battery located in the valve head 92, or radio frequency energy beamed to an electromagnetic transducer from an external station. The embodiment shown in Figures 25a to 25d is the latter. The pressure and temperature are sampled once per second, or at any other rate as required by legal or commercial obligations, and the results are displayed on the dashboard tire sensor display 106, marked as level monitors 104. If the tire pressure is outside the levels specified by the tire manufacturer for proper tire functioning, or indeed any other limits which arise from legal or commercial obligations, the specific tire 90, or tires, will have an error shown in colour (eg. red) on the car chassis symbol 102.

If the power is supplied to the sensors 96 by long-life batteries, the sensor display 106 would include a low battery indicator. This can be conveniently by illuminating the problem signal 102 in a different colour (eg. purple).

*Low Mass/Conductive Ceramic Membrane*

In a particular embodiment, the sensor has a membrane that is at least partially a conductive-ceramic compound, for example, titanium nitride, TiN. The use of MEMS-based sensors reduces the effects of acceleration due to the greatly decreased mass. As an illustrative but non-limiting example, a TiN membrane, with density of 5450 $kgm^{-3}$, radius of 50 $\mu$m and thickness of 0.5 $\mu$m, should experience a force of 0.2 $\mu$N due to an acceleration of 1000g; compared with a force of 1.6 mN for a pressure of 207 kPa (approximately 30 psi), which is typical for standard tire inflation pressure. The low mass of the membrane ensures that the affect of acceleration is negligible compared to that of the pressure.

TiN has been found to have a surprisingly high yield strength compared with other known materials used for capacitive sensor membranes. This makes it suitable for use in a wider range of stressful, harmful or dangerous environments. This also means that under standard conditions, membranes made from TiN should have greater lifetimes compared with standard capacitive pressure sensors.

The sensor membrane may be composed of other conductive-ceramic compounds. In particular, metal-ceramics, for example titanium aluminium nitride (TiAlN), titanium aluminium silicon nitride (TiAlSiN), tantalum nitride (TaN), tantalum aluminium nitride (TaAlN) or the like, have suitable properties. These metal ceramics are hard wearing and form a tough, thin surface oxide. The protective oxide gives the sensors good robustness and longevity. Metal ceramics are well suited to deposition by semiconductor fabrication techniques. This allows the sensor to have a thin membrane (0.5$\mu$m to 5$\mu$m) with diameters ranging from about 20 $\mu$m to 2000 $\mu$m. As discussed below, thin membranes have less internal stresses from rapid cooling, and less mass for limiting acceleration effects.

*Squeeze Film Damping*

According to another possible embodiment, an electrode in the sensor can be provided with holes to prevent squeeze film damping. Squeeze film damping occurs when the membrane deflects very close to the static electrode. The pressure of the fluid between the membrane and the static electrode rises and restricts, or damps, the membrane motion.

This can severely restrict the dynamic response of the membrane.

Channels or apertures can let the fluid between the fixed electrode and the dynamic electrode (membrane) flow away from the narrowing space between them. The fluid must still remained sealed within the sensor, however, letting it escape from between the opposing faces of the membrane and the fixed electrode avoids squeeze film damping effects.

### Internal Stresses

Residual stress in the membrane can affect its deflection and therefore the accuracy of the sensor. The fabrication process is a typical cause of residual stress. Rapid cooling material from an elevated temperature, can generate thermal stresses in proportion to the material co-efficient of thermal expansion. These stresses can deform the membrane and change its deflection characteristics under fluid pressure. This in turn can affect the accuracy of the pressure reading. As discussed above, masked lithographic deposition of the conductive-ceramic membrane allows it to be very thin - typically of the order of 0.5 $\mu$m thick. The temperature profile across the thickness of a thin membrane is much flatter than that of a relatively thick membrane. The membrane cooling is far more uniform and the internal stresses are largely eliminated.

### Laminated Membrane

Masked lithographic deposition also allows the sensor to have a relatively thick membrane for harsh operating conditions, while still avoiding the problems of residual thermal stresses. By forming the membrane as a laminate, the separately deposited layers are individually thin enough to avoid residual stress but the final laminate is sufficiently strong.

Instead of depositing layers of the same conductive material, the individual layers can be selected so their collective properties provide good resistance to harsh environments. For example alternate layers of TiN or TiAlN or various other combinations of metals and ceramics, for example, Ti and TiN.

### Laminated Roof Layer

Likewise the roof layer 54 may also composed of several different material layers, for example, silicon nitride, $Si_3N_4$, and silicon dioxide, $SiO_2$. Again, this avoids residual thermal stresses.

### Simulation Results and Analysis

To permit an examination of the performance of a TiN membrane capacitive sensor, a series of numerical simulations have been performed using a commercial finite-element modelling package called ANSYS 5.7 (http://www.ansys.com). Axisymmetric models were used to reduce computational time. This required a symmetry boundary condition at the centre of the membrane, whilst the edge of the membrane was held fixed. A square mesh with one thousand nodes distributed equally across the radius was employed, and meshes with half the number of cells exhibited less than 5% difference in the maximum stress and deflection.

As discussed above, a MEMS fabrication procedure can be used to deposit a 0.5$\mu$m thick layer of TiN to form a membrane. A membrane deflection of 5 $\mu$m provides sufficient variation in capacitance. For a standard passenger vehicle, the pressure applied to the membrane is typically be in the range 0 - 45 psi, allowing for 50 % tire over-inflation. According to linear theory (see Young, W.C. and Budynas, R.G., *Roark's Formulas for Stress and Strain,* 7th Edition, p 488, 2002), the membrane radius, R, for a specific deflection, $\Delta$, and applied pressure, *P*, is given by:

$$R = \left\{ \frac{16\Delta E t^3}{3P(1-v^2)} \right\}^{1/4} \qquad (1)$$

where *E* is the modulus (approximately 500 GPa for TiN), *t* is the membrane thickness and *v* is Poisson's ratio (0.25 for TiN). For these values it is found, from equation (1), that $R \approx 50\mu$m. The variation of membrane deflection with applied pressure is shown in Fig. 3 for a membrane radius of 50 $\mu$m. The comparison between linear finite element model (FEM) and linear theory is quite good.

At very high pressure, the deflection-pressure response becomes non-linear, and it is important to include these non-linear effects when designing a working tire pressure sensor.

### Non-planar Membrane

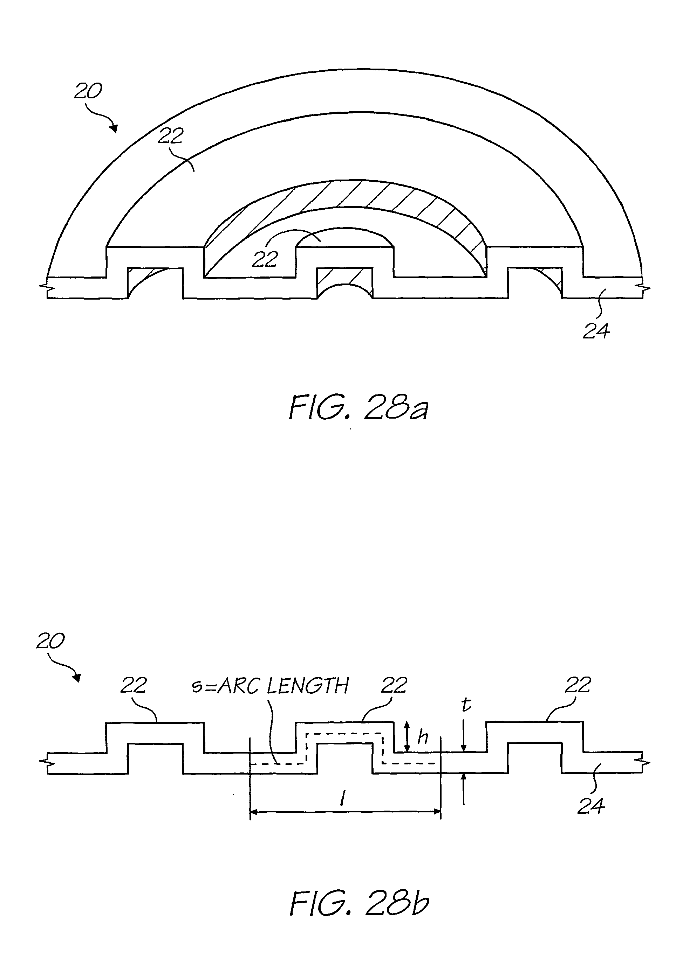

It is possible to extend the linear range of the device by corrugating the membrane. Figs. 28a and 28b illustrate a possible embodiment of a non-planar membrane 50 for use in a TPMS sensor. The membrane 50 is generally circular in extent and is provided with corrugations formed as annular ridges 22 on a base region 24. The number and spacing of annular ridges, and the individual shape of the annular ridges 22, can vary. Also, differently shaped annular ridges 22 could be provided on a single base region 24. In the particular embodiment illustrated, the corrugations are formed to have a square-shaped cross-sectional profile. Geometric parameters $s$, $l$, $H$ and $t$ are also illustrated and are referenced in the following equations. For a circular membrane, this amounts to superimposing a series of raised annuli on the membrane profile as illustrated in Fig. 28b. A theoretical model for the non-linear response for a corrugated membrane is:

$$\frac{PR^4}{Et^4} \; = \; A_p\left(\frac{\Delta}{t}\right) \; + \; B_p\left(\frac{\Delta}{t}\right)^3 \tag{2}$$

where

$$A_p \; = \; \frac{2(q \; + \; 2) \; (q \; + \; 1)}{3\{1 \; - \; (v \; / \; q)^2\}} \tag{3}$$

$$B_p \; = \; \frac{32}{q^2 \; - \; 9}\left(\frac{1}{6} \; - \; \frac{3 \; - \; v}{(q \; - \; v) \; (q \; + \; 3)}\right) \tag{4}$$

and

$$q = \frac{s}{l}\left\{1 + 1.5\left(\frac{H}{t}\right)^2\right\} \tag{5}$$

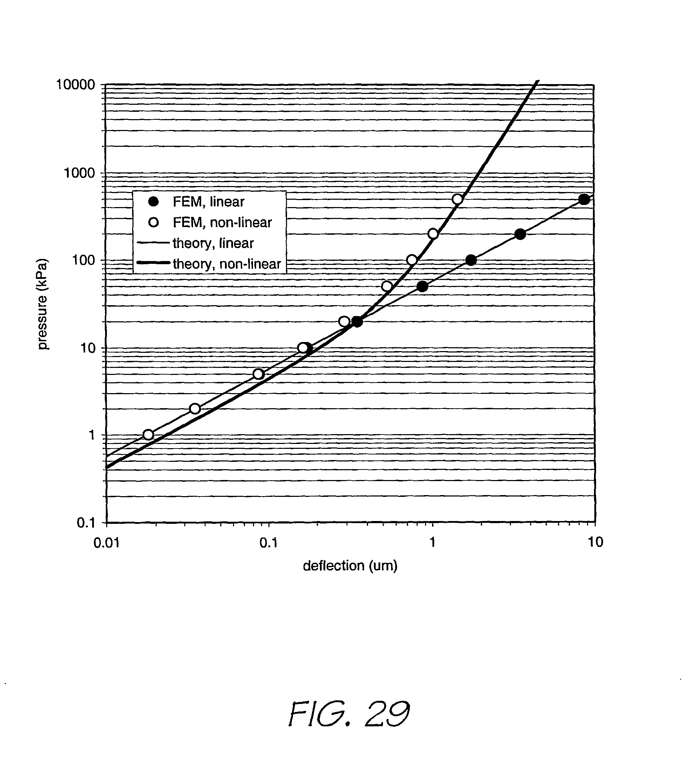

The variable $q$ is referred to as the corrugation quality factor, s is the corrugation arc length, $l$ is the corrugation period and $h$ is the corrugation height (refer to Fig. 28b). For right-angled corrugations, $s = l + 2\ h$. For a flat membrane, $q = 1$. To include non-linear effects in the finite element calculation, the load is applied over a number of sub-steps and an equilibrium solution is sought for each sub-step. The results for the non-linear simulation and theory are also shown in Fig. 29. The response becomes non-linear at approximately 30 kPa, which is well below the maximum expected tire pressure. The non-linear finite element simulations match the linear and non-linear theories below and above the critical point, respectively.

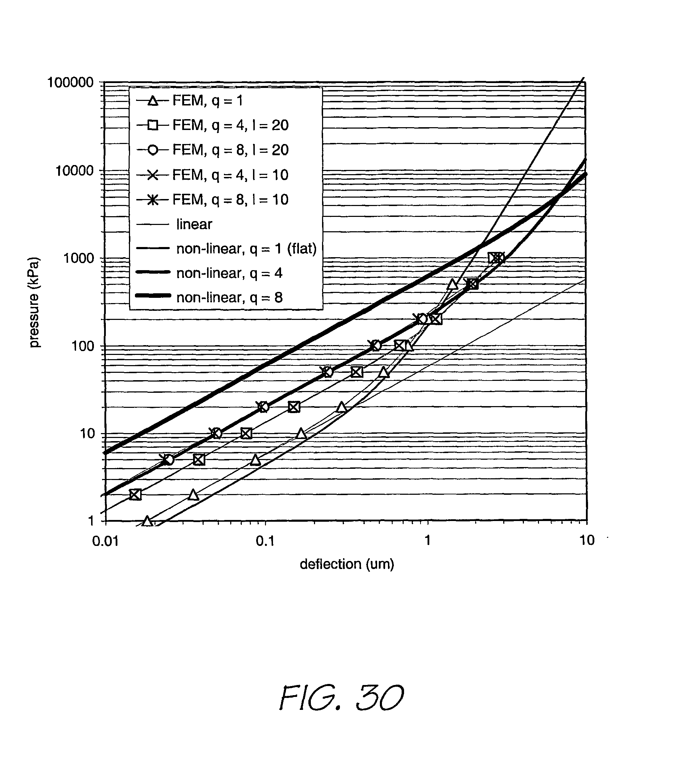

To assess the effect of corrugations on sensor designs, finite element models were constructed for two different corrugation periods, $l$ =10 and 20 $\mu$m, and two different quality factors, $q$ = 4 and 8. This results in a corrugation height of approximately 0.65 and 1.0 $\mu$m for $q$ = 4 and 8, respectively. The results in Fig. 30 indicate that it is necessary to include non-linear effects for the pressure range considered here; non-linearity should also be present due to the large number of rigid corners in the model.

The results of the finite element simulations are compared with the theoretical model in Fig. 30. This shows that a corrugation factor of 8 will extend the linearity of the sensor up to an applied pressure difference of approximately 1 MPa. It also shows that the corrugation period does not have a strong effect for the configurations examined herein.

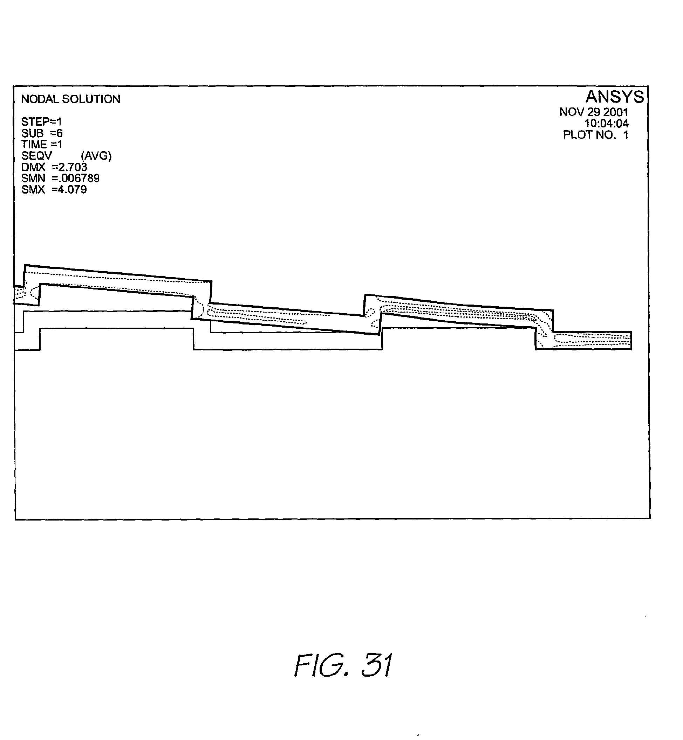

The maximum Von Mises stress behaves in a similar manner to the membrane deflection. The stress is concentrated near the junction at the lower side of the outermost corrugation with progressively less stress on the inner corrugations (see Fig. 31 for a typical stress distribution).

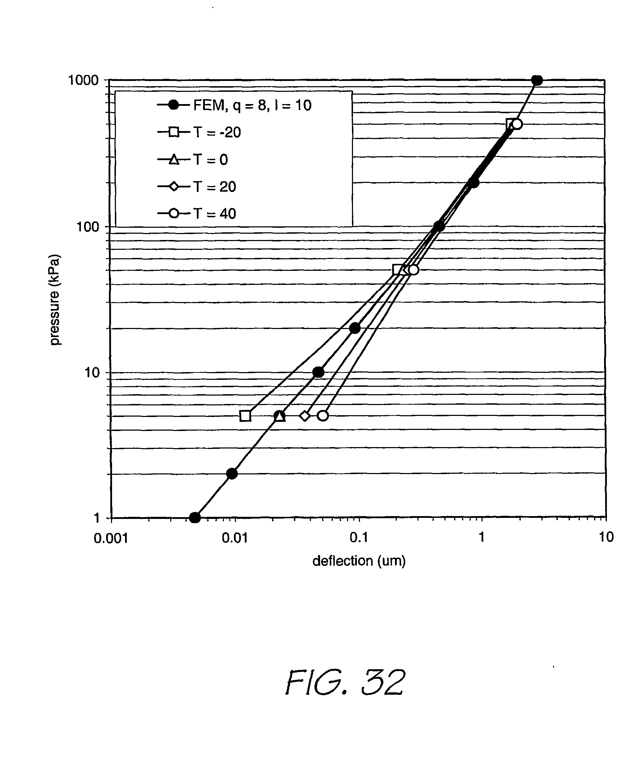

The coefficient of thermal expansion for TiN is 9.4 x $10^{-6}$ K$^{-1}$, which means that, for the range of likely operating temperatures, thermally induced stress might alter the sensor deflection. The effect of temperature on the sensor response is examined in Fig. 32 for a sensor with $q$ = 8 and $l$ = 10mm. The range of temperatures T examined, from -20 to + 40 °C, can be considered as representative of the heat-up cycle which occurs when a vehicle initiates a journey in a cold environment. It is seen that below 100 kPa pressure difference, there is a strong effect of temperature. At higher applied pressures, typical of operation, the thermal stresses are swamped by pressure-induced stresses and the temperature has little effect on the sensitivity.

Thus, a corrugated membrane sensor has a linear response in the region of interest. The small size of the sensor means that it is suitable for installation in wheel hub/rim valve stem and valve cap systems.

## Wafer Bonding

As discussed above in relation to Fig.s 3 to 23, the deep etch hole 56 needs to be sealed to maintain the fluid beneath the membrane 50 at a reference pressure. Typically, the reverse side of the wafer 32 is bonded to a sealing wafer.

Unfortunately, simply using a polymeric adhesive to bond a main wafer to the sealing wafer is not sufficient. The reference cavity (i.e. fluid beneath the membrane 50) seeks to maintain a constant pressure to ensure a minimum of calibration drift. The polymeric adhesive is permeable to air, which may result in leakage of air into the reference cavity because of the tire pressure. The flow rate across a permeable material is given by:

$$Q = \frac{P_{12}A\Delta P}{L} \tag{6}$$

where $P_{12}$ is the permeability of the material, $A$ is the surface area of the material exposed to the pressure difference, $\Delta P$ is the pressure difference and $L$ is the flow path length. The permeability of most polymers is of order $10^{-21}$ m$^3$ (STP) ms$^{-1}$m$^{-2}$Pa$^{-1}$, so for a pressure difference = 300 kPa, cavity radius = 50$\mu$m, seal height = 10$\mu$m and seal (flow) length = 10$\mu$m, the flow rate is approximately 9.4 x $10^{-20}$ m$^3$ s$^{-1}$.

If the cavity height is 100 $\mu$m, then the total cavity volume is 7.9 x $10^{-13}$ m$^3$, and approximately 100 days would be required for the reference cavity pressure to equilibrate with the tire pressure. Whilst this may be suitable for testing purposes, it would make such a device unsuited to practical use.

Another way to seal the reverse side of the wafer is to over-mold the sensor with plastic to increase the path length for leakage. The permeability of polymers is about ten times less than that of adhesives, and so a ten-year seal would require a seal length of approximately 0.5 mm. This is too long for a MEMS device that is less than 50 $\mu$m long. To maintain the high yield and versatility of the pressure sensor as a MEMS device, a different sealing solution is required.

Wafer bonding offers the possibility of a hermetic seal at the cost of a slightly different fabrication procedure. The most prevalent forms of wafer bonding are: direct wafer bonding, anodic (electrostatic) bonding and intermediate layer bonding (see Table 3).

**Table 3.** Wafter bonding techniques. BCB = benozcyclobutene, PDMS = polydimethylsiloxane, PSG = phosphosilicate glass. * = unsuitable due to porosity.

| Type of Bond | Description | T$_{bond}$ (°C) | Surface Finish |
|---|---|---|---|
| Direct Wafer (Si Fusion) | Reactive surfaces brought into contact under high temperature | 800-1100 | <0.01 mm |
| Anodic (Electrostatic, Mallory Process) | High voltage (0.5 to 1.5 kV) applied across both wafers | 200-1000 | < 1$\mu$m |
| Intermediate Layer *Au-Si Glass Frit (e.g. Corning #75xx) Au-Au BCB\** | Low melting temperature material applied to one or both wafer surfaces, bonds form when temperature and pressure are applied | 363 400-600 | 1 $\mu$m |
| *PDMS (plasma treated) Tin, Si$_3$N$_4$ LPCVD PSG APCVD BO* | | <400 250 25 | |

(continued)

| Type of Bond | Description | T$_{bond}$ (°C) | Surface Finish |
|---|---|---|---|
| *Boron-Doped Si Organics** | | 100-300? 1100 450 450 <200 | |

In the first method, two ultra clean surfaces are brought into contact after they have been activated (e.g. the surfaces are made hydrophilic or hydrophobic); the bond forms at elevated temperatures (near 1000°C). In the second, the two wafers are brought into contact, in either vacuum, air or an inert atmosphere, and a large voltage is applied across the wafers. The bond forms because of migration of ions from one wafer surface to the other. This method has relaxed requirements in terms of surface finish, which makes it more suitable for bonding two wafers that have undergone a series of fabrication steps; however, the high voltage may damage CMOS layers. The third option employs a layer of low melting point material that is deposited on one or both wafers on the contact face. The wafers are brought into contact at moderate temperatures and the bond forms at the interface once pressure is applied. There are many different materials that may be used to form the intermediate layer (e.g. $Si_3N_4$ TiN). The intermediate layer method overcomes the disadvantage of direct wafer (high cleanliness) and anodic (high voltage) bonding.

The invention may also be said to broadly consist in the parts, elements and features referred to or indicated herein, individually or collectively, in any or all combinations of two or more of the parts, elements or features, and wherein specific integers are mentioned herein which have known equivalents in the art to which the invention relates, such known equivalents are deemed to be incorporated herein as if individually set forth.

Although the preferred embodiment has been described in detail, it should be understood that various changes, substitutions, and alterations can be made by one of ordinary skill in the art without departing from the scope of the present invention as defined by the wording of the claims.

**Claims**

1. A capacitive pressure sensor (30) for sensing a fluid pressure, the pressure sensor comprising:

   a sealed chamber (58) partially defined by a flexible membrane (50), the chamber containing a fluid at a reference pressure, such that the flexible membrane deflects from any pressure difference between the reference pressure and the fluid pressure, the membrane being at least partially formed from conductive material; and,
   associated circuitry (34) for converting the deflection of the flexible membrane relative to a fixed electrode (36) into an output signal indicative of the fluid pressure; wherein,
   the chamber (58), the flexible membrane (50), the fixed electrode (36) and the associated circuitry (34) are formed on and through a silicon substrate (32) using lithographically masked etching and deposition techniques, and **characterized in that**:
   the sealed chamber comprises channels (33) extending through the substrate, said channels allowing the fluid in the sealed chamber to escape from a space between the flexible membrane and the fixed electrode.

2. A pressure sensor according to claim 1 wherein the membrane (50) is at least partially made from a metal-nitride compound.

3. A pressure sensor according to claim 2 wherein the metal-nitride compound is titanium nitride, titanium aluminium nitride, titanium aluminium silicon nitride, tantalum nitride or tantalum aluminium nitride.

4. A pressure sensor according to claim 3 further comprising a CMOS layer (34) disposed between the fixed electrode and the substrate.

5. A pressure sensor according to claim 4 further comprising a passivation layer (37) at least partially deposited over the fixed electrode (36).

6. A pressure sensor according to claim 1 wherein the flexible membrane (50) is a laminate having at least two layers wherein at least one of the layers is at least partially formed from conductive material.

7. A pressure sensor according to claim 6 wherein the layers within the laminate are formed from the deposition of different metal ceramics.

8. A pressure sensor according to claim 1 further comprising a second chamber with a second membrane, the second chamber being sealed from the fluid pressure and the second membrane deflecting from a predetermined pressure difference in the second chamber; wherein,
the associated circuitry converts the deflection of the second membrane into an adjustment of the output signal to compensate for the temperature of the sensor.

**Patentansprüche**

1. Kapazitiver Drucksensor (30) zur Abfühlung eines Fluiddrucks, wobei der Drucksensor Folgendes umfasst:

   eine abgedichtete Kammer (58), teilweise begrenzt durch eine flexible Membran (50), wobei die Kammer ein Fluid bei einem Bezugsdruck enthält, in der Weise, dass die flexible Membran bei jeglicher Druckdifferenz zwischen dem Bezugsdruck und dem Fluiddruck auslenkt und wobei die Membran zumindest teilweise aus leitfähigem Material gebildet ist; und
   zugehöriger Schaltkreis (34) zur Umwandlung der Auslenkung der flexiblen Membran relativ zu einer fixierten Elektrode (36) in ein Ausgangssignal, das den Fluiddruck anzeigt; wobei
   die Kammer (58), die flexible Membran (50), die fixierte Elektrode (36) und der zugehörige Schaltkreis (34) auf einem und durch ein Siliziumsubstrat (32) unter Verwendung von lithographisch maskierten Ätz- und Abscheidungstechniken gebildet werden,
   und **dadurch gekennzeichnet, dass**:

   die abgedichtete Kammer Kanäle (33) umfasst, die sich durch das Substrat hindurch erstrecken, wobei die Kanäle ermöglichen, dass das Fluid in der abgedichteten Kammer aus einem Abstand zwischen der flexiblen Membran und der fixierten Elektrode entweichen kann.

2. Drucksensor nach Anspruch 1, wobei die Membran (50) zumindest teilweise aus einer Metall-Nitrid-Verbindung gefertigt ist.

3. Drucksensor nach Anspruch 2, wobei die Metall-Nitrid-Verbindung Titannitrid, Titanaluminiumnitrid, Titanaluminiumsiliziumnitrid, Tantalnitrid oder Tantalaluminiumnitrid ist.

4. Drucksensor nach Anspruch 3, ferner umfassend eine CMOS-Schicht (34), die zwischen der fixierten Elektrode und dem Substrat angeordnet ist.

5. Drucksensor nach Anspruch 4, ferner umfassend eine Passivierungsschicht (37), die zumindest teilweise über der fixierten Elektrode (36) aufgebracht ist.

6. Drucksensor nach Anspruch 1, wobei die flexible Membran (50) ein Laminat mit mindestens zwei Schichten ist, wobei mindestens eine der Schichten zumindest teilweise aus leitfähigem Material gebildet ist.

7. Drucksensor nach Anspruch 6, wobei die Schichten innerhalb des Laminats aus der Abscheidung von verschiedenen Metallkeramikwerkstoffen gebildet sind.

8. Drucksensor nach Anspruch 1, ferner umfassend eine zweite Kammer mit einer zweiten Membran, wobei die zweite Kammer gegen den Fluiddruck abgedichtet ist und die zweite Membran bei einer vorher bestimmten Druckdifferenz in der zweiten Kammer auslenkt; wobei
der zugehörige Schaltkreis die Auslenkung der zweiten Membran in eine Anpassung des Ausgangssignals zum Ausgleich für die Temperatur des Sensors umwandelt.

**Revendications**

1. Détecteur de pression capacitif (30) pour détecter une pression de fluide, le détecteur de pression comprenant :

   une chambre scellée de manière étanche (58) partiellement définie par une membrane flexible (50), la chambre contenant un fluide à une pression de référence de telle sorte que la membrane flexible fléchisse à partir de toute différence de pression entre la pression de référence et la pression de fluide, la membrane étant au moins

**EP 1 802 952 B1**

partiellement formée à partir d'un matériau conducteur ; et
des éléments de circuit associés (34) pour convertir la flexion de la membrane flexible par rapport à une électrode fixe (36) en un signal de sortie indicatif de la pression de fluide ;
la chambre (58), la membrane flexible (50), l'électrode fixe (36) et les éléments de circuit associés (34) étant formés sur et à travers un substrat de silicium (32) à l'aide de techniques de gravure et de dépôt à masque de lithographie,
et **caractérisé par le fait que** :

la chambre scellée de manière étanche comprend des canaux (33) s'étendant à travers le substrat, lesdits canaux permettant au fluide dans la chambre scellée de s'échapper d'un espace entre la membrane flexible et l'électrode fixe.

2. Détecteur de pression selon la revendication 1, dans lequel la membrane (50) est au moins partiellement faite à partir d'un composé nitrure métallique.

3. Détecteur de pression selon la revendication 2, dans lequel le composé nitrure métallique est le nitrure de titane, le nitrure de titane et d'aluminium, le nitrure de titane, d'aluminium et de silicium, le nitrure de tantale ou le nitrure de tantale et d'aluminium.

4. Détecteur de pression selon la revendication 3, comprenant en outre une couche CMOS (34) disposée entre l'électrode fixe et le substrat.

5. Détecteur de pression selon la revendication 4, comprenant en outre une couche de passivation (37) au moins partiellement déposée sur l'électrode fixe (36).

6. Détecteur de pression selon la revendication 1, dans lequel la membrane flexible (50) est un laminat ayant au moins deux couches, au moins une des couches étant au moins partiellement formée à partir d'un matériau conducteur.

7. Détecteur de pression selon la revendication 6, dans lequel les couches à l'intérieur du laminat sont formées à partir du dépôt de différentes céramiques métalliques.

8. Détecteur de pression selon la revendication 1, comprenant en outre une seconde chambre avec une seconde membrane, la seconde chambre étant scellée de manière étanche vis-à-vis de la pression de fluide et la seconde membrane fléchissant à partir d'une différence de pression prédéterminée dans la seconde chambre ;
les éléments de circuit associés convertissant la flexion de la seconde membrane en un ajustement du signal de sortie pour compenser la température du détecteur.

FIG. 1

FIG. 2

A                                                                    A'

~70

*FIG. 3*

42                                    42

                                                                    36
                                                                    34

                                                                    32

*FIG. 4*

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 26

106

| 1 | 2 | Pressure | | | | Temperature | | | |
|---|---|---|---|---|---|---|---|---|---|
| | | 1 | 2 | 3 | 4 | 1 | 2 | 3 | 4 |

3　4

102

104

**FIG. 25d**

88

90

100

**FIG. 25a**

92

**FIG. 25b**

96　94

98

**FIG. 25c**

FIG. 27(a)

EP 1 802 952 B1

FIG. 27(b)

FIG. 27(c)

EP 1 802 952 B1

FIG. 27(d)

54

66

50

53

37

34

32

66

*FIG. 27(e)*

64

54

37

34

32

FIG. 27(f)

FIG. 27(g)

51

40

54

50

37

36

34

32

42

42

42

42

33

33

33

EP 1 802 952 B1

FIG. 27(h)

EP 1 802 952 B1

EP 1 802 952 B1

FIG. 28a

FIG. 28b

38

FIG. 29

FIG. 30

FIG. 31

FIG. 32

**EP 1 802 952 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 09113078
- AU 10868866
- AU 10043300
- AU 10043299
- AU 10129502
- AU 10043350
- AU 10129501
- AU 10043295
- AU 10129500
- AU 10043351
- AU 10129499
- AU 10129504
- AU 10466072

- AU 10129505
- AU 10040455
- AU 10250967
- AU 10040456
- AU 10853270
- AU 10040473
- AU 10466059
- AU 10040405
- AU 10466060
- AU 10893376
- AU 10898214
- WO 03106952 PCT
- US 6051853 A

**Non-patent literature cited in the description**

- Federal Motor Vehicle Safety Standards: Tire Pressure Monitoring Systems; Controls and Displays. *US Federal Register,* 2001, vol. 66 (144), 38982-39004
- Tire Pressure Monitoring System. *FMVSS,* 2001
- **Tran, T.A. ; Miller III, W.V. ; Murphy, K.A. ; Vengsarkar, A.M. ; Claus, R.O.** Stablized Extrinsic Fiber Optic Fabry-Perot Sensor for Surface Acoustic Wave Detection. *Proc. Fiber Optic and Laser Sensors IX, SPIE,* 1991, vol. 1584, 178-186

- **Menini, Ph. ; Blasquez, G. ; Pons, P. ; Douziech, C. ; Favaro, P. ; Dondon, Ph.** Optimization of a BiCMOS Integratetd Transducer for Self-Compensated Capacitive Pressure Sensor. *Proc. 6th IEEE Int. Conf. Electronics, Circuits and Systems,* 1999, vol. 2, 1059-1063